# EUROPEAN PATENT APPLICATION

(11) **EP 2 472 861 A1**
(43) Date of publication of application: **04.07.2012**
(21) Application number: 10197406.1
(22) Date of filing: 30.12.2010
(51) Int. Cl.: H04N 7/173

(54) **User interaction**

(71) Applicant: The Bridge TV Limited, London W1G 8AU (GB)
(72) Inventor: Matthew Leatherbarrow, London W10 6PP (GB); Steve Dann, London E14 8LN (GB)
(74) Representative: Skone James, Robert Edmund

(57) **Abstract**

A method and system for providing content to a user are provided, in which the user may access additional content by selecting alerts displayed during the reproduction of a media item. By selecting the alert, the user can cause reproduction of the video item to pause and the additional content to be retrieved using a single input. In preferred embodiments, the media item is a video item, and the additional content relates to the subject matter of the video item at the time the selectable alert is displayed.

## Description

### Field of the Invention

The present invention relates to the delivery of content to users. In particular, the present invention relates to the delivery of video content to users over a network.

### Background to the Invention

Modern technology allows users to access video content in a number of ways and across a range of circumstances. Whereas once video content was confined to television or cinema, users are now able to access video content through a range of devices, particularly internet-connected devices.

The diversification in the manners in which users may access video content has brought a number of advantages, particularly allowing users to distribute user-created content to a potential audience which was not previously accessible. However, the new paradigms in content distribution have not replaced traditional channels, and have instead supplemented them. Many users still turn to conventional television as their primary source of video content.

Television provides a controlled environment for delivering content to a user, which allows the user to passively consume content without any requirement for active interaction. This is often desirable to the user, who can develop a knowledge of and affinity with particular television programs and indeed channels and can consequently trust that program or channel to provide entertainment without having to search for and locate video content themselves. A user can therefore relax while engaging with a television program or channel. This allows the user to engage with the video content itself, without being distracted by extraneous interactions or information.

These benefits of television arise in part because it is delivered over broadcast networks. As such, the same content is delivered to all users, meaning that an individual user is not able to influence the content that is delivered. However, this is itself a limitation. While users may wish to receive predictable programming from channels that they trust, they may also desire to interact with the video content at times. In addition, from a service provider's point of view, it may be desirable to provide interactive content as a means of monetising the user's activities, for example, by encouraging the user to access paid content.

Moreover, delivering video content over broadcast networks prevents the optimisation of the content for particular users. Again, this may be considered a disadvantage both from the user's viewpoint and that of the service provider, who may consider targeted advertising, for example, to be desirable.

While opportunities for interaction between a user and content delivered over a broadcast network is limited, the principle alternative provided to television for users to view video content, the internet, suffers from a number of defects. In particular, as explained above, users are often glad of the control exerted on the content delivered to them by a particular television channel. Typical internet video providers provide limited assistance in this regard, placing the burden on the user to identify content to view.

Moreover, while providing content on the internet allows a degree of interactivity, conventional approaches to this intrude on the benefits of television. For example, users typically access internet content through a web browser. In this manner, the web browser retrieves a web page, into which a video item is embedded. The user may thus view the video item. The manner in which interactivity is provided in such a system is the provision of one or more links in the web page to some additional content. In some cases, these links are overlaid on the video content in the hope of attracting the user's attention, although this itself can be distracting and unhelpful to the user.

So, in order to interact when viewing a video item on the internet, a user must select a link. This will cause a new web page to be downloaded that represents some additional content. However, this new web page will either be downloaded in a new browser window, or will replace the current web page in the existing browser window. Both approaches are flawed.

If the new web page is provided in a new browser window, then the user will have two browser windows to manage simultaneously. In effect, the additional content will be displayed in one browser window while the video item continues to play in another. It will consequently be impossible to engage fully both with the additional content in the new web page and the original video item. In some cases, the content of the two web pages may directly conflict. For example, there may be a conflict between audio from the video item and audio from the additional content.

If the new page replaces that containing the video item in the original browser window, then this also creates problems. In particular, by navigating away from the original web page, the user will have lost their place in the original video item. If the user wishes to return to the video item, they are required to reload the original web page. This will cause the video item to began reproduction from the beginning, thereby repeating aspects of the video item that the user has already seen.

So, conventional solutions to providing interactive content together with video content are limited. In particular, when video content is delivered over a broadcast network, as is the case for television, only limited interactivity can be provided, while when video content is provided over the internet, the user is discouraged from accessing this content because it is intrusive and prevents the user obtaining full enjoyment from the video content itself.

Moreover, there remains a difficulty in providing engaging video content to a user that is optimised for that user. In a broadcast environment, all users receive the same data, while an internet environment is often the less preferred option for users who wish to enjoy video content passively.

### Summary of the Invention

According to a first aspect of the present invention, there is provided a method for delivering content to a user, comprising:
reproducing a media item;
displaying a selectable alert during reproduction of the media item;
receiving an input indicating selection of the alert;
pausing the reproduction of the media item in response to the input; and
displaying additional content related to the alert in response to the input.

So, the present invention can assist in providing a seamless environment for a user to experience additional content during reproduction of a media item. The media item is reproduced and an alert is displayed which indicates to the user that additional content is available. If the user selects the alert, reproduction of the media item is paused and the additional content is displayed to the user. Subsequently, reproduction of the media item can be resumed from the point at which it was paused.

The present invention realises the above functionality by the provision of a single selectable alert which both pauses the reproduction of the media item and causes the additional content to be displayed. The user is therefore presented with a user interface which is easy to manipulate and which requires only minimal interaction for the user to access the additional content. In preferred embodiments, the steps of pausing the reproduction of the media item and displaying the additional content occur simultaneously, thereby ensuring a seamless experience for the user.

The media item may be any type of time-varying content that can be reproduced, and may include images and/or audio. Preferably, the media item is a video item (which may or may not comprise accompanying audio). However, the media item may take other forms, and may for example be an audio item having no video element.

In accordance with the present invention, a user can interact so as to receive additional content safe in the knowledge that it will be possible to return to the specific point in the media item which they left. Moreover, this process is provided to the user simply by selecting a single alert. There is no need for the user to manually pause the media item, or store details as to the place in the media item at which they selected the alert.

The present invention, therefore, combines the advantages of passive access to media content, while providing a degree of interactivity. The user smoothly transfers between additional content and the media item without the need to manage web browsers or the like. This reduces the disincentives for the user to access additional content which are typically present in existing approaches.

In preferred embodiments, the additional content may be relevant to the media item. For example, if the media item is an interview with a photographer, then the additional content may be a gallery of the photographer's work. In this way, the additional content can be used to deepen the user's experience of the media item.

Preferably, the method further comprises displaying a plurality of selectable alerts during reproduction of the media item, each of the plurality of selectable alerts being displayed at different predetermined times. In this way, different selectable alerts are shown to the viewer during the reproduction of the media item, enabling the alerts to be sensitive to the context of the media item at the time at which the alert is reproduced. As the additional content is related to the alert, this will also be sensitive to this context.

For example, a selectable alert relating to a particular product may be displayed when that product appears in the media item, allowing the user to access additional content relevant to the product, such as a purchase gateway. At a later time in the media item, a second product may appear and a second, different alert may be displayed which allows the user to access additional content relevant to the second product.

Preferably, each of the selectable alerts is displayed when a time code of the media content is greater than or equal to a given stored time code value. For example, time codes which are present in conventional video formats can be used to identify the predetermined times at which selectable alerts are to be displayed. This is an effective solution which does not require significant processing power.

In preferred embodiment, the selectable alert or alerts is/are overlaid on the media item. In this manner, the alert is visible to a user observing the media item. The user is not obliged to observe some other display area in order to have access to the additional content.

Preferably, the alerts cover 5% of the media item. It has been found that this coverage of the media item by the alert ensures that the alert is clearly viewable and recognisable without intruding into the user's enjoyment of the media item. Alternatively, the alert may cover between 2.5% and 7.5% of the media item, less than 10% of the media item, or less than 50% of the media item.

In preferred embodiments, resumption of reproduction of the media item occurs in response to a further input. That is to say, the user provides a further input in order to cause resumption of the media item once they have viewed the additional content. This could take the form of a 'done' or 'return' button for the user to select when they wish to return to the media. As explained above, the media will then resume from the point at which the user selected the alert. In some embodiments, it is not necessary to receive a further input for the reproduction of the media to be resumed, and the method may comprise resuming reproduction of the media item with or without a further input.

Preferably, the method further comprises authenticating the user prior to reproducing the media item. In this manner, information relevant to the identity of the user can be used during the method. For example, the selectable alerts and/or additional content may be chosen according to a profile of the user.

According to a second aspect of the present invention, there is provided a device for delivering content to a user, comprising;
a display; and
a user interface for receiving an input from a user indicating selection of an alert, wherein the device is configured to
reproduce a media item on the display;
display a selectable alert on the display during reproduction of the media item;
pause the reproduction of the media item in response to the input; and
display additional content related to the alert in response to the input.

It can also be appreciated that the invention can be implemented using computer program code. Indeed, according to a further aspect of the present invention, there is therefore provided a computer program product comprising computer executable instructions for carrying out the method of the first aspect. The computer program product may be a physical storage medium such as a Read Only Memory (ROM) chip. Alternatively, it may be a disk such as a Digital Versatile Disk (DVD-ROM) or Compact Disk (CD-ROM). It could also be a signal such as an electronic signal over wires, an optical signal or a radio signal such as to a satellite or the like. The invention also extends to a processor running the software or code, e.g. a computer configured to carry out the method described above

### Brief Description of the Drawings

An embodiment of the present invention will now be described with reference to the accompanying drawings, in which:
Figure 1 is an overview of a content delivery system according to an embodiment of the present invention;
Figure 2 illustrates the principle components of a content item delivered by the content delivery system of Figure1;
Figure 3A illustrates a time code array forming part of a content item;
Figure 3B illustrates a URL forming part of a content item;

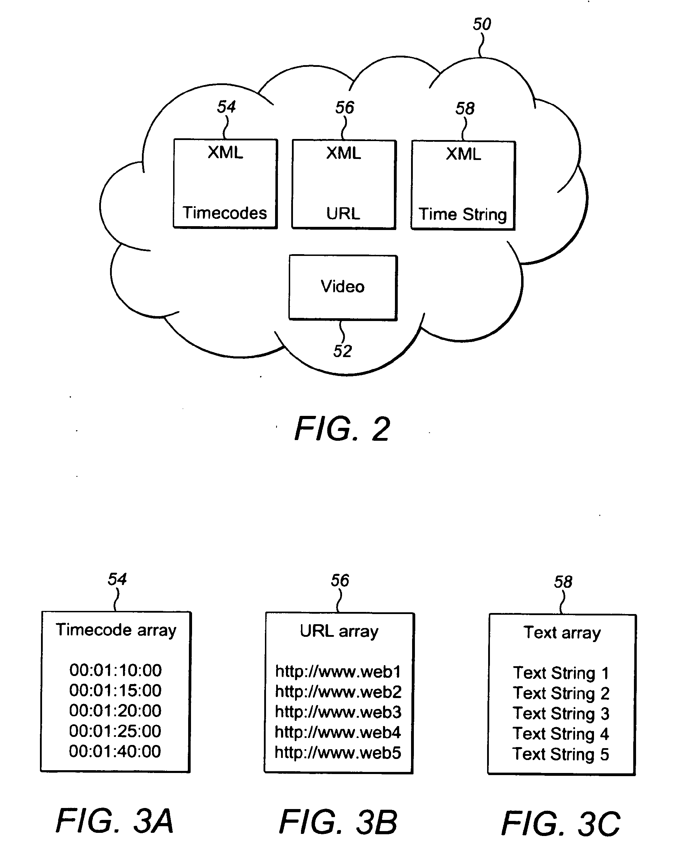

Figure 3B illustrates a text string array forming part of a content item;

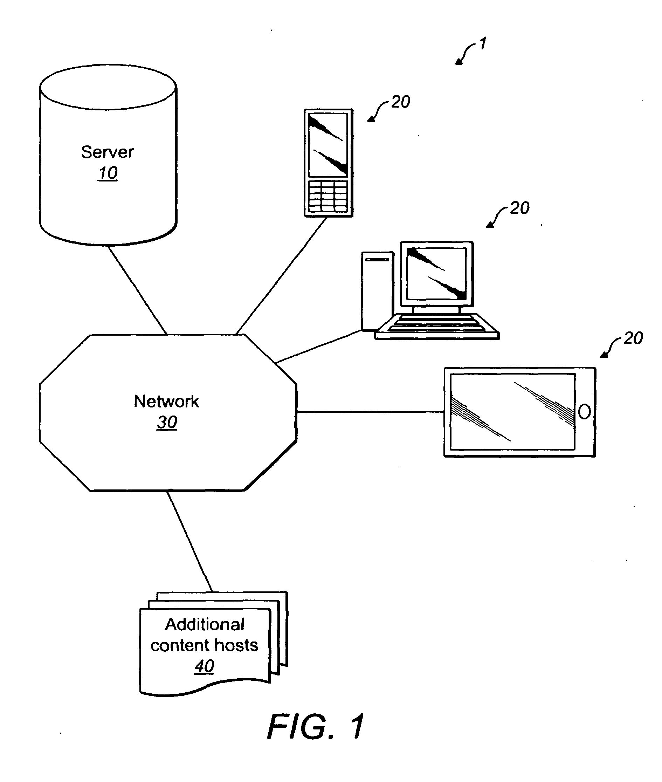

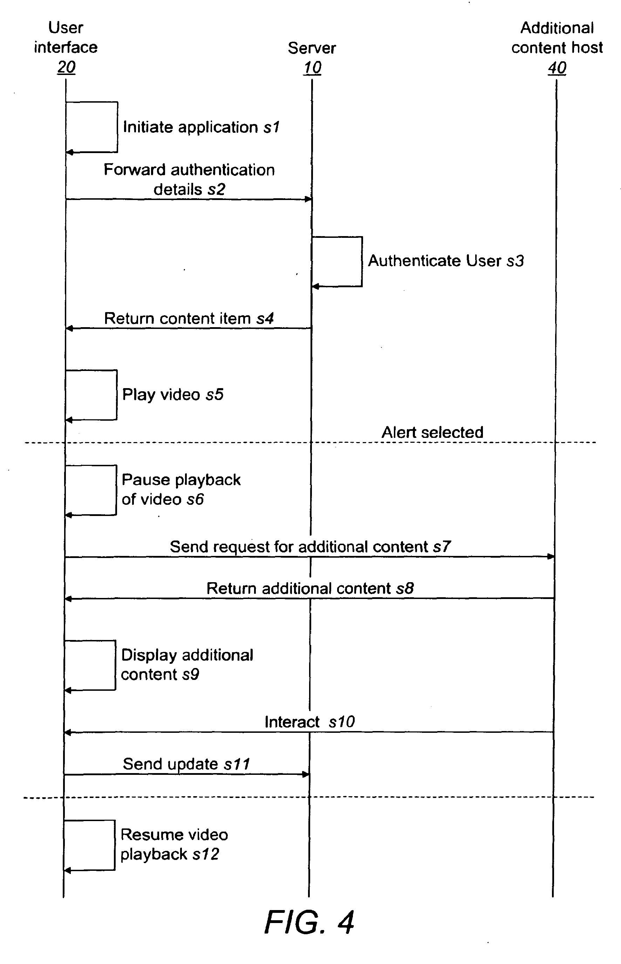

Figure 4 shows the operation of the system of Figure 1 during delivery of a content item to a user terminal;

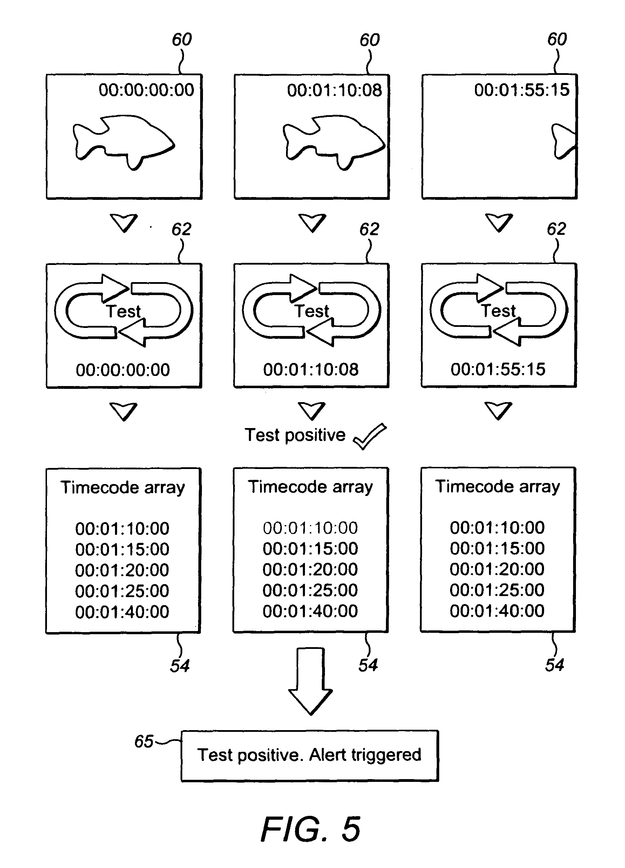

Figure 5 illustrates the playback of a video by a user terminal;

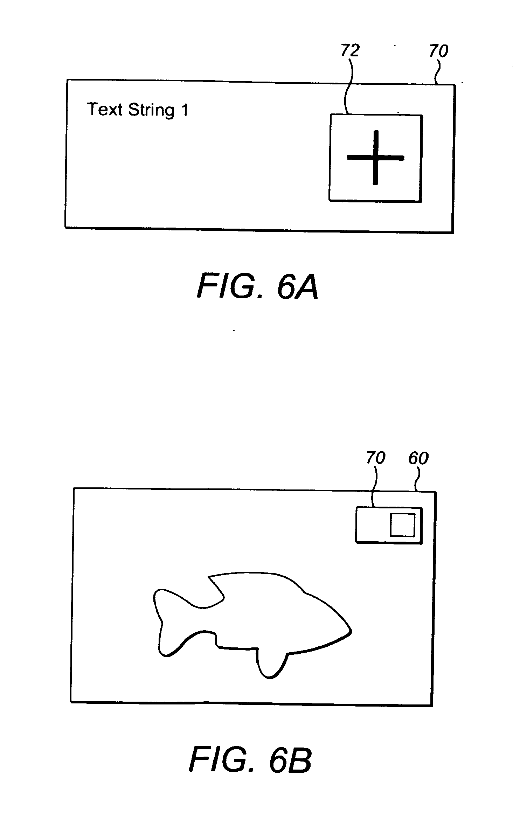

Figure 6A illustrates an alert icon displayed during playback of a video; and
Figure 6B illustrates the position of the alert icon of Figure 6A in relation to an image frame of the video.

### Detailed Description

Figure 1 shows a content delivery system 1 in accordance with a preferred embodiment of the present invention. The content delivery system 1 comprises a server 10, a plurality of user terminals 20 and a network 30. The network 30 connects the server 10 to the user terminals 20. Additionally, the content delivery system 1 of the present invention comprises one or more additional content hosts 40 also connected to the network 30.

The server may be a conventional computing device for use as a network server and may comprise a processing unit and a content store. The server 10 may further comprise a user interface for facilitating control of the server's 10 functionality.

The content store holds media content for delivery to the user terminals 20, together with metadata relating to the media content. In particular, the data stored in the content store is divided into a plurality of content items, each content item including a video (i.e. media content) and metadata relating to that video. The video may or may not include an audio track.

Although in the preferred embodiment, the media content is a video, it is envisaged that other forms of time varying media may be used in accordance with the present invention. For example, the media content may be purely audio.

The server 10 may further comprise a profile store which stores profile information for users able to access content via the user terminals 20. In particular, the profile store may store authentication information, such as a user name and/or password, allowing the server 10 to authenticate a user. Moreover, the profile information may include preference information regarding the type of content of interest to the user. As explained below, this may be used to control the content items that are delivered to a user terminal 20 operated by a particular user.

The profile store of the server 10 may also store a range of additional information relating the users. For example, the profile store may store information such as users' full names, dates of birth, genders, addresses, bank details and/or photographs. Where bank details of the users are stored by the profile store these may be used to facilitate purchase operations carried out by a user by automatically populating purchase forms with these details.

The user terminals 20 are devices and may be various in their form factor and capabilities. User terminals 20 that may be used in accordance with the present invention include personal computers (PCs), mobile phones, tablet devices and internet-enabled televisions. The user terminals 20 preferably include user interfaces to allow the user to interact with the user terminals 20 as appropriate. The user interface may take the form of a keyboard, remote control, pointing device, touchscreen or any other interface as appropriate. The user terminals 20 comprise a display which can be used to display video and other content to the user.

An application is loaded on the user terminals 20 for managing content received from the server 10. The operation of this application will be described in more detail with reference to Figure 4 below.

In the preferred embodiment, the network 30 is the internet. This allows user terminals 20 to connect to the server 10 in a conventional and readily accessible manner. Moreover, a large number of existing devices are able to connect to the internet, and thereby to act as user terminals in the context of the present invention.

The additional content hosts 40 are connected to the network 30 and store additional content in additional content stores. The additional content is content related to the media content in the content store which may be selectively accessed by a user of one of the user terminals 20 at specified times during the display of media content to the user. Additionally or alternatively to the provision of additional content hosts 40, additional content may be stored by the server 10 or at the user terminals 20.

Figure 2 shows the principal components of a content item 50 stored in the content store of the server 10. As can be seen from Figure 2, the content item 50 of the preferred embodiment comprises a video 52 and metadata in the form of three separate XML sheets 54, 56, 58. The provision of separate XML sheets allows the metadata to be separately edited, allowing the metadata to be updated with relative ease.

In common with conventional video standards, the video 52 in the content item 50 includes a sequence of individual image frames each associated with a time code. During playback of the video 52, the frames are reproduced sequentially in order with the time codes. The time codes therefore represent a time elapsed since the beginning of the video 52.

The first XML sheet is time code sheet 54. As illustrated in Figure 3A, the time code sheet 54 comprises an array of time codes. Each entry in the array is associated with one of an ascending list of index integers (not shown), such as 1, 2, 3 etc.. That is to say the first time code in the array may be associated with index integer 1, while the second time code in the array may be associated with index integer 2, and so on.

The second XML sheet is URL sheet 56. As illustrated in Figure 3B, the URL sheet 56 comprises an array of URLs. Each entry in the array is associated with one of an ascending list of index integers (not shown), such as 1, 2, 3 etc.. That is to say the first URL in the array may be associated with index integer 1, while the second URL in the array may be associated with index integer 2, and so on. The index integers assigned to URLs in the URL sheet correspond to those assigned to time codes in the time code sheet.

The third XML sheet is text string sheet 58. As illustrated in Figure 3C, the text string sheet 58 comprises an array of text strings. Each entry in the array is associated with one of an ascending list of index integers (not shown), such as 1, 2, 3 etc.. That is to say the first text string in the array may be associated with index integer 1, while the second text string in the array may be associated with index integer 2, and so on. The index integers assigned to text strings in the text string sheet correspond to those assigned to URLs in the URL sheet and those assigned to time codes in the time code sheet.

As will be explained in more detail below, a number of different sets of metadata may be provided with each video for delivery to different users. For example, when video is delivered to the user terminal 20 the metadata sent with that video may depend on the profile of the user operating the user terminal 20.

The steps by which the preferred embodiment of the present invention operates will now be described with reference to Figure 4.

At step s1, a user initiates the application using the user interface of the user terminal 20. This causes the user terminal to display an authentication page to the user. The user enters authentication details using the user interface, and these are transmitted to the server 10 together with a request for content, at step s2. The authentication details may include conventional authentication data, such as a user name and/or password.

The initiation of the application also sets an index integer value at zero. As will be explained below, the value of the index integer is used to retrieve data from the XML sheets 54, 56, 58.

At step s3, the server 10 authenticates the user by comparing the authentication details with valid details held in the profile store. If the authentication details are found to be valid, the server 10 then returns a content item 50 to the user terminal 20, at step s4, in response to the content request. The authentication of the user at step s3 allows the server 10 to identify the user. The skilled person will understand that alternative methods of identifying the user may be employed. For example, the identity of the user could be inferred from such details as the user terminal's 20 IP address or the like.

At step s4, the content item 50 is returned to the user. This content item 50 may be selected by the server 10 in dependence of the profile of the user stored in the profile store. In particular, the content item may include metadata chosen on the basis of the profile of the user. For example, the profile store 16 may include information relating to the user's preferences. As will be explained below, the metadata allows the user to access additional content, and selecting metadata according to the user's profile assists in ensuring that such additional content is of interest to the user. Moreover, the video 52, or aspects of the video 52, in the content item 50 may be chosen in dependence on the profile of the user. For example, the video 52 may include commercials, and these may be chosen according to the preferences of the user identified by their profile.

At step s5, the user terminal 20 reproduces the video 52 in the content item 50. As mentioned above, this causes a sequence of image frames to be reproduced, each frame being associated with a time code. The skilled person will understand that it is not necessary for the entire video 52 to be downloaded from the server 10 to user terminal 20 before reproduction of the video 52 may commence. Instead, video may be streamed to the user terminal 20 in a conventional manner. This reduces the time delay experienced by the user in accessing the video.

Step s5 is explained in more detail in Figure 5. Figure 5 illustrates three distinct image frames 60 in the video displayed at different times. As explained above, each image frame 60 is associated with a time code. In the example shown in Figure 5, the first image frame 60 is associated with time code 00:00:00:00, the second image frame is associated with time code 00:01:10:08, and the third image frame 60 is associated with time code 00:01:55:15. For ease of understanding, these time codes are displayed in the image frames 60 of Figure 5, although the skilled person will appreciate that the time codes need not actively be displayed or form part of the image frames 60 themselves.

In accordance with the present invention, the step s5 of reproducing the video 52 involves constant polling of the time code of the video to compare it to time codes in the time code array 54. This is represented by test blocks 62 in Figure 5.

As will be recalled, each time code in the time code array 54 is associated with an index integer, which is set at zero when the application is initiated at step s1. If the time code of the video 52 is found to be greater than or equal to the time code in the time code in the time code array 54 associated with the current value of the index integer, an alert event is triggered, as illustrated at block 64 of Figure 5.

In detail, the first image frame 60 in Figure 5 is associated with time code 00:00:00:00 and no alert event is triggered because this is less than all the time codes in the time code array 54. The second image frame 60 shown in Figure 5 is associated with time code 00:01:10:08 and this triggers an alert event 64 because it is greater than the first time code in the time code array 54 of 00:01:10:00. The third image frame 60 shown in Figure 5 is associated with time code 00:01:55:15. Although this is greater than the time codes in the time code array 54, no alert event is triggered. This is because by this time the value of the index integer has been raised above the index integers associated with any of the time codes in the time code array. In deciding whether to trigger an alert event, only those time codes associated with index integers less than the present value of the index integer are considered.

When an alert event is triggered, the index integer value is incremented by one. For example, if, as at initiation, the index integer value is zero, the index integer value is increased to one. Accordingly, each time code in the time code array 54 will only cause an alert event to be triggered once.

The next step in the alert event is that the application retrieves the text string from text string sheet 58 which is associated with the current index integer value. The text string is used to generate an alert icon.

An exemplary alert icon 70 is shown in Figure 6A. As can be seen the alert icon 70 comprises the text string retrieved from the text string sheet 58 and in this case also comprises an alert button 72. The alert button 72 may be used on a touchscreen interface as the region which a user may contact to cause further actions. Where the user interface 22 of the user terminal 20 is not a touchscreen, the alert button 72 may simply be a graphical element indicating to the user that interaction is possible.

The skilled person will understand that other elements may be added to the alert icon 70 as desired. For example, other graphical elements may be provided. In particular, a further XML sheet may be provided with an array of graphical elements in much the same manner as the array of text strings in the text string sheet 58. These may be retrieved and displayed in the alert icon 70 in combination with the elements shown in Figure 6A.

The alert icon 70 is overlaid on the video 52 playing on the user terminal 20 for a predetermined period after the alert event is triggered. In the preferred embodiment, this period is 15 seconds, although longer or shorter time periods may be adopted as appropriate.

Figure 6B shows the alert icon 70 overlaid on a frame of the video 52. The alert icon 70 preferably covers less than 50% of the screen area, more preferably less than 10% of the screen area, more preferably between 2.5% and 7.5% of the screen area, and in the preferred embodiment 5% of the screen area. The preferred coverage of the alert icon 70 ensures that it is visible to the user of the user terminal 20 without be obstructive to their enjoyment of the video 52.

In order to assist in providing a pleasant user experience, in the preferred embodiment the user icon fades on to the video 52 when an alert event is triggered. Similarly, the alert icon 60 can fade out after the predetermined time period. In other embodiments, alternative methods of introducing the alert icon 70 to the user may be employed as required.

Importantly, the alert icon 70 can be selected by the user using the user interface 22 of the user terminal 20 to request additional content. In the preferred embodiment, the additional content is related to the video 52 displayed to the user. For example, if the video 52 shows an interview with a photographer the additional content could be a gallery of the photographer's work. In another example, if the video is an advert for a product, the additional content may be a payment gateway allowing the user to purchase the product.

Returning to Figure 4, the steps that occur when the user selects an alert icon 70 and thereby requests additional content are shown after the dashed line. As will be explained below, the selection of the single alert icon 70 causes a number of events to occur, which provides a seamless experience to the user, encouraging the user to access additional content without fearing that their enjoyment of the video 52 will be impeded.

Firstly, at step s6, in response to selection of the alert icon 70 the user interface pauses playback of the video 52. This may include storing details of the time code of the video 52 at the point when the user selected the alert icon 70. By storing the time code at this point, it is possible for the application to return to this point of the video 52 later.

At step s7, again in response to selection of the alert icon 70, the user terminal 20 requests the additional content from one of the additional content hosts 40. This is done by sending an HTTP request to the additional content host 40 that stores the required additional content. In order to generate an appropriate request, it is necessary to know the address of the additional content. This is retrieved from the URL sheet 48 referred to above. In particular, when the alert icon 70 is selected, the user terminal 20 extracts the URL from the URL sheet 48 which is associated with the current value of the index integer in order to generate the HTTP request. Notably, because the text string used to generate the alert icon 70 and the URL used to access the additional content are identified by the index integer they are linked, allowing the text string to provide information as to the nature of the additional content the user may expect in selecting the alert.

The additional content host 40 that receives the HTTP request then returns the additional content to the user terminal 20 at step s8. The skilled person will understand that additional content may be retrieved in other manners and from other sources. For example, additional content may be preloaded on the user terminal 20 or may be stored on the server 10.

At step s9, the user terminal 20 displays the additional content. The additional content may be interactive, allowing subsequent interaction between the user terminal 20 and the additional content host 40 at step s10. As an example, the additional content may allow a user to purchase an item shown in the video 52 when the alert event was triggered. Additional interaction in this case may include the user providing confirmation of their desire to purchase the product or providing payment details. As mentioned above, in some circumstances the server 10 may hold the user's bank details, and therefore may be able to provide payment details automatically without the user having to re-enter them each time. When the user has completed their interaction with the additional content, they may press a 'done' or 'resume' button to return to the video 52.

Once the interaction between the user and the additional content is complete, an update is sent at step s11 to the server 10 by the user interface 20 indicating the activity of the user. For example, the update may inform the server that the user elected the alert icon and requested the additional content, and may provide further details of the user's interaction with the additional content, such as whether any products were purchased. This allows the server 10 to update the profile of the user. Accordingly, the server 10 may provide metadata in future content items that is appropriate to the user's behaviour, or indeed may provide video 52 that is appropriate to the user. For example, if the user is found to respond to commercials relating to cosmetic products, then further commercials relating to cosmetic and similar products may be served to the user, providing further opportunities for the user to purchase such items.

The profile of the user may be used to determine the content item 50 returned to the user terminal 20 at step s4. Because the content item is formed of a number of separate components, they can be constructed modularly for different user profiles. For example, video 52 may be associated with a time code sheet 54 defining appropriate times for alert icons 70 to be shown to the user during playback of the video 52. By varying the URL sheet 58 and/or text string sheet 56, the content of these alert icons 70 can be changed without having to edit the time code sheet 54 or the video 52 itself. This assists in the optimisation of the user experience according to their user profile.

As step s12, reproduction of the video 52 resumes once the user's interaction with the additional content is complete. The user terminal resumes reproduction of the video 52 from the position it was paused when the user selected the alert icon 70. Accordingly, the user is able to access the additional content without compromising their experience of viewing the video 52. There is no need for the user to reload the video 52, or search for the position at which they left to interact with the additional content.

Where reproduction of the video at the user terminal 20 involves streaming of the video from the server 10 to the user terminal 20, parts of the video 52 are preferably downloaded for buffering while the uses accesses the additional content. This reduces the lag time when the user returns to the video 52 at step s12.

So, the preferred embodiment of the present invention allows a user to access a video 52 via an application running on a user terminal 20. The video 52 is downloaded from a server 10 to the user terminal 20 with metadata. This metadata is used to allow the user to access additional content. Beneficially, the preferred embodiment allows the user to access the additional content without losing their place in the video 52, and provides a user-friendly technique for reproduction of the video to be resumed.

The skilled person will understand that various modifications are possible to the embodiment described above. For example, the order of the steps shown in Figure 4 may be varied according to requirements, or alternative methods may be employed to establish the times at which alerts are to be displayed.

Moreover, there are a number of additional features of the application running on the user terminal 20 in the preferred embodiment. For example, if the user exits the application during reproduction of a video 52 in a content item 50, the application may store details of the position in the video 52 the user had reached before exiting the application (for example, the application may store time code information). When the user next initiates the application, it may offer the user the opportunity to return to the same content item 50, either from the beginning of the video 52 or from the point which had been reached when the application was exited. As such, if the user finds it necessary to leave the application for a period of time (for example, to carry out other tasks on the user terminal 20), this need not interfere excessively with the user's experience of the content item 50.

A further advantageous feature that may be incorporated in to the application is the ability to bring up a navigation menu at any time. For example, at a user terminal having a touch screen interface, the user may touch the screen during reproduction of a video 52 in order to bring up a navigation menu which is overlaid on an area of the video 52. This navigation menu may allow the user to manipulate the reproduction of the video 52, for example providing functions such as pause, rewind and fast-forward. Moreover, the navigation menu may provide access to additional content associated with alerts which have already been displayed. For example, the navigation menu may comprise a button which allows the user to instantly access the additional content associated with the most recently displayed alert icon 70. In this case, such a button acts as a selectable alert itself, in that the process for retrieving the additional content proceeds as explained above with reference to steps s6 to s12 of Figure 4. The navigation menu may also provide links to various other additional content if required.

Other variations and modifications will be apparent to the skilled person. Such variations and modifications may involve equivalent and other features which are already known and which may be used instead of, or in addition to, features described herein. Features that are described in the context of separate embodiments may be provided in combination in a single embodiment. Conversely, features which are described in the context of a single embodiment may also be provided separately or in any suitable sub-combination.

It should be noted that the term "comprising" does not exclude other elements or steps, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present invention.

## Claims

1. A method for delivering content to a user, comprising:
reproducing a media item;
displaying a selectable alert during reproduction of the media item;
receiving an input indicating selection of the alert;
pausing the reproduction of the media item in response to the input; and
displaying additional content related to the alert in response to the input.

2. A method according to claim 1, comprising
displaying a plurality of selectable alerts during reproduction of the media item, each of the plurality of selectable alerts being displayed at different predetermined times.

3. A method according to claim 2, wherein each of the selectable alerts is displayed when a time code of the media item is greater than or equal to a given stored time code value.

4. A method according to any one of the preceding claims, wherein the selectable alert or alerts is/are overlaid on the media item.

5. A method according to claim 4, wherein the alerts cover 5% of the media item.

6. A method according to any one of the preceding claims, wherein resumption of reproduction of the media item occurs in response to a further input.

7. A method according to any one of the preceding claims, further comprising authenticating the user prior to reproducing the media item.

8. A computer program product comprising computer executable instructions for carrying out the method of any one of the preceding claims.

9. A device for delivering content to a user, comprising;
a display; and
a user interface for receiving an input from a user indicating selection of an alert, wherein the device is configured to
reproduce a media item on the display;
display a selectable alert on the display during reproduction of the media item;
pause the reproduction of the media item in response to the input; display additional content related to the alert in response to the input.

10. A device according to claim 9, further configured to
display a plurality of selectable alerts during reproduction of the media item, each of the plurality of selectable alerts being displayed at different predetermined times.

11. A device according to claim 10, wherein each of the selectable alerts is displayed when a time code of the media item is greater than or equal to a given stored time code value.

12. A device according to any one of claims 9 to 11, wherein the device is configured to overlay the selectable alert or alerts on the media item.

13. A device according to claim 12, wherein the alerts cover 5% of the media item.

14. A device according to any one of claims 9 to 13, wherein the device is configured to resume reproduction of the media item in response to a further input.

15. A device according to any one of claims 9 to 14, wherein the device is further configured to authenticate the user prior to reproducing the media item.
